(19) Europäisches Patentamt / European Patent Office / Office européen des brevets

(11) **EP 4 026 611 A1**

(12) **DEMANDE DE BREVET EUROPEEN**


(43) Date de publication:
**13.07.2022 Bulletin 2022/28**

(21) Numéro de dépôt: **22150593.6**

(22) Date de dépôt: **07.01.2022**

(51) Classification Internationale des Brevets (IPC):
***B01J 20/26*** *(2006.01)* ***B01J 20/08*** *(2006.01)*
***B01J 20/10*** *(2006.01)* ***B01J 20/20*** *(2006.01)*
***B01J 20/28*** *(2006.01)* ***B01J 20/18*** *(2006.01)*
***F28F 13/18*** *(2006.01)* ***B01D 53/26*** *(2006.01)*
***B01J 20/32*** *(2006.01)*

(52) Classification Coopérative des Brevets (CPC):
**B01J 20/262; B01D 53/261; B01J 20/08; B01J 20/103; B01J 20/18; B01J 20/20; B01J 20/267; B01J 20/28011; B01J 20/28026; B01J 20/3234; B01J 20/3238; B01J 20/324; B01J 20/3272; B01J 20/3282;** B01D 2253/25;

(Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **07.01.2021 FR 2100127**



(71) Demandeur: **Commissariat à l'Energie Atomique et aux Energies Alternatives**
**75015 Paris (FR)**

(72) Inventeurs:
- **LARGILLER, Grégory**
**38054 Grenoble cedex 09 (FR)**
- **CORREA FERREIRA, Igor**
**38054 Grenoble cedex 09 (FR)**

(74) Mandataire: **Germain Maureau**
**12, rue Boileau**
**69006 Lyon (FR)**


(54) **MATÉRIAU COMPOSITE ADSORBANT DESTINÉ À DES DISPOSITIFS DE CONTRÔLE DE L HUMIDITÉ, DES DISPOSITIFS D ÉCHANGE ET DE STOCKAGE THERMIQUE**


(57) Matériau composite adsorbant (4) destiné à des dispositifs de contrôle de l'humidité, des dispositifs d'échange thermique ou de stockage thermique, le matériau composite adsorbant (4) comprenant :
- un adsorbant d'humidité (1), choisi dans le groupe comprenant une zéolite, un gel de silice, un charbon actif, une alumine activée et/ou leur combinaison, et
- une matrice (3) en un polymère perméable, ledit polymère perméable étant obtenu à partir d'un polymère (2) choisi parmi l'acétate de cellulose ou un élastomère non réticulé, tel qu'un siloxane et/ou un élastomère silané, de sorte que la matrice (3) en un polymère perméable est stable jusqu'à 240°C et présente une perméabilité à la vapeur d'eau supérieure à 6000 barrers.


Fig. 3

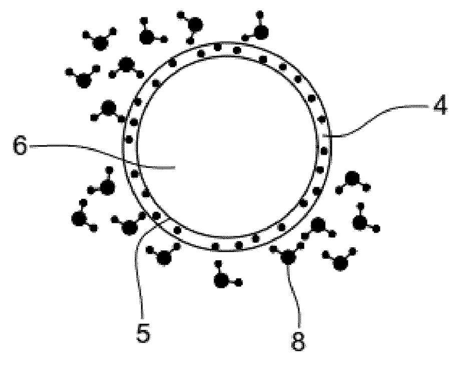


-200-

EP 4 026 611 A1

(52) Classification Coopérative des Brevets (CPC):
(Cont.)
B01J 2220/46

## Description

La présente invention se rapporte au domaine des matériaux adsorbants en vue d'application dans le domaine du contrôle de l'humidité, de l'échange et du stockage thermique. En particulier, la présente invention concerne un matériau composite adsorbant utilisé dans de tels dispositifs ainsi que le procédé de fabrication desdits dispositifs.

Les matériaux adsorbants/ désorbants l'humidité sont très intéressants pour de nombreuses applications industrielles, par exemple pour le séchage des gaz, le contrôle de l'humidité et le stockage thermique. En effet, selon les conditions de température et d'humidité relative dans lequel il est placé, le matériau adsorbant adsorbe l'humidité par un phénomène exothermique qui dégage de la chaleur ou bien le matériau sorbant désorbe l'humidité qu'il contient par une réaction endothermique qui consomme de la chaleur. Toutefois, les matériaux sorbants sont difficilement utilisables en tant que tels car leurs propriétés intrinsèques ne répondent pas à toutes les exigences de l'industrie. Ils sont par exemple difficiles à mettre en forme, présentent une faible résistance mécanique de sorte qu'ils sont déteriorés lors de leur utilisation ou de leur mise en forme d'usage. Il ont besoin d'être associés à d'autres composants pour une mise en forme facilitée et une utilisation durable et fiable. Des matériaux composites comprenant un matériau adsorbant ont été élaborés par le passé. L'un d'entre eux utilise un mélange de polymère thermoplastique enrichi par des plastifiants utiles pour améliorer les propriétés rhéologiques en vue de la mise en forme et la limitation des efforts tangentiels et par une cire pour apporter de la perméabilité au gaz et à la vapeur d'eau à la matrice mais la présence de polymère thermoplastique limite à 100°C la température d'utilisation du matériau composite. Une autre solution proposée consiste à utiliser un polymère à base d'époxy. Toutefois l'epoxy est formé à partir de bisphenol qui est potentiellement toxique et le polymère obtenu est un thermoplastique cassant et peu susceptible de supporter un grand nombre de cyclage thermiques.

Un des buts de la présente invention est de pallier un ou plusieurs de ces inconvénients. A cet effet, et selon un premier aspect, l'invention propose un matériau composite adsorbant destiné à des dispositifs de contrôle de l'humidité, dispositifs d'échange thermique ou de stockage thermique, le matériau composite adsorbant comprenant :

- un adsorbant d'humidité, choisi dans le groupe comprenant une zéolite, un gel de silice, un charbon actif, une alumine activée et/ou leur combinaison, et
- une matrice en un polymère perméable, ledit polymère perméable étant obtenu à partir d'un polymère choisi parmi l'acétate de cellulose ou un élastomère non réticulé, tel qu'un siloxane et/ou un élastomère silané, de sorte que la matrice en un polymère perméable est stable jusqu'à 240°C et présente une perméabilité à la vapeur d'eau supérieure à 6000 barrers.

Ainsi composé, le matériau composite adsorbant selon l'invention permet d'associer un adsorbant d'humidité à une matrice en un polymère perméable à la vapeur d'eau de sorte à conserver les propriétés sorbantes de l'adsorbant d'humidité placé au sein même du polymère (se reporter ci-dessous aux résultats de test de désorption). De plus, le matériau composite adsorbant ainsi composé offre une grande résistance au cyclage thermique ce qui garantit une solution industrielle pérenne. En effet, la matrice en un polymère perméable ainsi configurée présente un module de cisaillement G compris entre 0.3 et 3MPa ce qui permet de d'obtenir une grande résistance mécanique aux chocs, aux contraintes mécaniques statiques et répétées, même lorsqu'elle est soumise à des changements de température importants. Par exemple, des tests de 5 cyclages consécutifs ont été réalisés respectivement à 120°C et 200°C avec un adsorbant à base de zéolite et une matrice en un polymère perméable en PDMS (acronyme de PolyDiMethylSiloxane) et aucune modification des propriétés ni aucune dégradation n'ont été observées.

Selon une disposition, les siloxanes sont choisis selon la formule suivante :

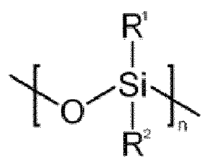

avec $R^1$ choisi indépendamment de $R^2$ parmi des groupements substitués ou non substitués d'alkyl, aryl, alcényl, alcinyl, alcoxy, phenoxy et $R^2$ parmi des groupements substitués ou non substitués de alkyl, aryl, alcényl, alcinyl, alcoxy, phénoxy, et de préférence $R^1$ et $R^2$ sont des groupements méthyles. Les groupements substitués peuvent comprendre des groupements fluorés.

Les polymères à base de silane sont choisis par exemple parmi ceux de formule :

$[(CH_3)_2Si(CH_2)nR]_{DP}$ avec DP = degré de polymérisation, R = $Si(CH_3)_2O$ ou $CH_2$ et n compris entre 2 et 20, ou bien

$[(CH_3)_2Si\ _x\text{-}C_6H_4Si(CH_3)_2O]_{DP}$ avec x signifiant la position para- ou meta-.

Selon une possibilité, l'élastomère non réticulé choisi pour former la matrice présente des terminaisons hydrogène.

Selon un exemple de réalisation l'élastomère non réticulé choisi pour former la matrice est un siloxane à terminaison hydrogène, par exemple du PDMS à terminaison hydrogène, ou un mélange de siloxane à terminaison hydrogène et d'un silane à terminaison hydrogène.

Selon une disposition, l'élastomère non réticulé choisi pour former la matrice est dépourvu de siloxane à terminaison hydroxyle, de siloxane à terminaison silanol, par exemple de PDMS à terminaison silanol, d'hydrure de siloxane, de silane trifonctionnel, et de silane avec au moins trois groupes hydrolysables.

Selon une variante de réalisation, l'élastomère non réticulé choisi pour former la matrice comprend un siloxane à terminaison hydrogène et du silane.

Selon une autre variante de réalisation, l'élastomère non réticulé choisi pour former la matrice est dépourvu de silane seul.

La plage de poids moléculaire varie de $10^4$ à $10^6$ g/mol pour les polymères réticulables à température ambiante.

Le poids moléculaire est supérieur ou égal à $3.10^5$ g/mol pour les polymères réticulables sous l'action de la chaleur.

Selon une possibilité, le matériau composite adsorbant est obtenu par réticulation d'une formulation précurseur comprenant un élastomère non réticulé et un absorbant d'humidité.

Selon une disposition, la formulation précurseur utilisée pour l'obtention du matériau composite adsorbant comprend de l'adsorbant d'humidité et d'un polymère perméable tel que l'acétate de cellulose ou un élastomère non réticulé, tel qu'un siloxane et/ou un élastomère silané, le polymère perméable constituera la matrice après réticulation.

De préférence, la formulation précurseur utilisée pour l'obtention du matériau composite adsorbant est constituée de l'adsorbant d'humidité et d'un polymère perméable tel que l'acétate de cellulose ou un élastomère, tel qu'un siloxane et/ou un élastomère silané, le polymère perméable constituera la matrice après réticulation.

Selon une variante la formulation précurseur peut inclure en complément un agent de réticulation (dans une plage allant de 0,5% poids à 20% poids), un solvant et/ou un primaire d'accroche.

Autrement dit, le matériau composite adsorbant est dépourvu du tout plastifiant, additif, cire ou autres. Cette composition limite les risques de décomposition du matériau composite adsorbant au cours des cyclages thermiques grâce à une forte cohésion entre l'adsorbant d'humidité et ladite matrice en un polymère perméable et facilite les opérations de mise en forme. En effet, tout élément additionnel à cette composition, hormis un agent de réticulation, conduirait inévitablement à une désagrégation du matériau composite adsorbant au cours du temps.

Selon une disposition, la formulation précurseur est dépourvue d'eau.

La matrice en un polymère perméable peut comprendre un mélange de plusieurs polymères.

Avantageusement, la matrice en un polymère perméable est obtenue par réticulation d'un siloxane, et de préférence par réticulation de PDMS. La perméabilité d'un telle matrice de PDMS avoisine en effet 40000 barrers.

La réticulation augmente le degré de polymérisation du/des polymère(s) présent(s) dans la matrice en un polymère perméable. La réticulation est obtenue à l'air et à température ambiante en présence d'un agent de réticulation ou par traitement thermique à une température inférieure à 100°C.

Avantageusement, la matrice en un polymère perméable est configurée pour présenter une perméabilité à la vapeur d'eau supérieure à 10000 barrers.

En unité SI, le Barrer, généralement utilisé par l'homme de l'art peut être exprimé selon l'unité de perméabilité CGS, en utilisant les éléments suivants:

$$1 \text{ barrer} = \text{M} \times 3.35 \times 10^{-13} \ \frac{\text{g} \cdot \text{cm}}{\text{s} \cdot \text{cm}^2 \cdot \text{bar}}$$

où M est le poids moléculaire du gaz pénétrant (g / mol).

Les polymères perméables appartenant à la famille des siloxanes, tel que le PDMS, sont stables à des températures allant jusqu'à 250°C ce qui permet une utilisation avec une large gamme d'adsorbants d'humidité, dont ceux actifs à des températures élevées. Il est donc possible de les utiliser dans un grande palette d'applications industrielles.

En ce qui concerne le matériau composite adsorbant composé d'acétate de cellulose, celui-ci sera mis en forme par un traitement thermique à 260°C permettant la fusion du polymère thermoplastique.

Selon une disposition, l'adsorbant d'humidité est une zéolite choisie parmi un silico-alumino-phosphate, notamment une zéolite Mitsubishi Plastics AQSOA-Z01®, AQSOA-Z02®, AQSOA-Z05®, un alumino-silicate XAY et un ferro-alumino-phosphate. La zéolite est en effet une structure cristalline microporeuse permettant d'adsorber une grande quantité de molécules d'eau. Elle est choisie de préférence pour présenter un mécanisme de désorption/adsorption à une température inférieure à 200° C entre 0%Hr et 80%Hr (Hr pour Humidité relative), et de préférence entre 10°C et 100°C. Par exemple, le silico-alumino-phosphate fonctionne entre 20°C et 100°C et entre 0%Hr et 70%Hr

De préférence l'adsorbant d'humidité est une zéolite de la famille AQSOA® ou un gel de silice. Par gel de silice, on entend dans le présent document un polymère d'hydroxyde de silicium $Si(OH)_4$.

De manière concrète, le taux de charge de l'adsorbant d'humidité est compris dans une plage allant d'environ 10% en volume à environ 70% en volume par rapport au volume d'une formulation précurseur du matériau composite adsorbant. La formulation précurseur étant constituée par le mélange d'un adsorbant d'humidité asséché au préalable, avec un polymère tel de l'acétate de cellulose ou un élastomère non réticulé, tel qu'un siloxane et/ou un élastomère silané. Elle est ensuite réticulée ou mise en forme, selon la nature du polymère utilisé, pour conduire au matériau composite adsorbant.

Par exemple, lorsque le taux de charge de zéolite est plus de 50% en volume par rapport au volume de la formulation précurseur, la viscosité de la formulation précurseur est d'environ 100 000Pa.s. Il est possible d'effectuer son dépôt par immersion.

Pour la zéolite AQSOA-Z05®, le taux de charge se situe dans une plage allant de 28 à 85% poids du poids total de la formulation précurseur. De préférence, le taux de charge est compris entre 28 et 65% poids du poids total de la formulation précurseur.

Lorsqu'on souhaite utiliser le matériau composite adsorbant seul, dans des dispositifs de contrôle d'humidité, des dispositifs d'échange et /ou de stockage thermique, le taux de charge de l'adsorbant d'humidité se situe dans une plage allant de 40 % à 70% en volume par rapport au volume de la formulation précurseur. Dans ce cas, le matériau composite adsorbant est utilisé sous forme d'agrégat, et ne nécessite pas nécessairement l'utilisation d'un substrat support.

Selon un autre aspect, la présente invention propose un dispositif de contrôle d'humidité, d'échange thermique ou de stockage thermique, comprenant un substrat support comportant une surface de réception et une couche d'un matériau composite adsorbant tel que précédemment décrit, déposée sur la surface de réception.

La couche en matériau composite adsorbant présente une épaisseur supérieure à 5 micromètres.

Lorsque l'adsorbant d'humidité est une zéolite se présentant sous la forme d'une poudre d'un diamètre moyen de 5 micromètres, l'épaisseur de la couche en matériau composite est préférentiellement comprise entre 400 et 800 micromètres.

De préférence, le dispositif de contrôle d'humidité d'échange thermique ou de stockage thermique est obtenu à partir d'une formulation précurseur présentant un taux de charge en adsorbant d'humidité allant de 15 % à 45 % en volume par rapport au volume de la formulation précurseur. Cette proportion garantit l'obtention d'une formulation précurseur simple à appliquer sur le substrat support grâce à une fluidité adaptée et la couche en matériau composite adsorbant qui en résulte est homogène et efficace.

Selon une disposition, la surface de réception consiste en une face exposée du substrat support, notamment lorsque le substrat présente une forme globale parallélépipédique, sans exclure d'autres formes.

Selon une autre disposition, la surface de réception consiste en la totalité de la surface du substrat support, notamment lorsque le substrat présente une forme globale sphérique ou une forme globale de grille sans exclure d'autres formes.

Selon encore une autre variante, la surface de réception consiste également en une surface interne au volume périphérique global du substrat support, notamment lorsque le substrat support présente des alvéoles, des nids d'abeilles ou autres géométries complexes.

La couche en matériau composite adsorbant déposée est parfois appelée 'couche de recouvrement' car elle recouvre la surface de réception du substrat support. Lorsque la surface de réception consiste en la totalité de la surface dudit substrat support, ladite couche en matériau composite adsorbant peut être appelée 'couche d'enrobage' car elle enrobe le substrat support.

De manière avantageuse, la surface de réception du substrat support est configurée pour présenter des groupements hydroxyles. Les groupements hydroxyles permettent en effet d'obtenir un effet d'adhérence entre le matériau composite adsorbant comprenant des silanes, et la surface de réception grâce à une interaction telle qu'un couplage avec la matrice lors de la réticulation.

Le couplage est soit obtenu par une réaction chimique conduisant à une liaison forte de type ionique ou de type covalente entre le substrat support et le matériau composite adsorbant ou à une interaction de type liaison hydrogène.

Dans ce dernier cas, la couche de matériau composite adsorbant sera de préférence une couche d'enrobage de la totalité du substrat support de sorte à renforcer le lien et la tenue du matériau composite adsorbant au substrat support.

Selon une possibilité et la nature du substrat support, la surface de réception est activée par traitement UV ou par plasma.

Selon une disposition, la surface de réception comprend un métal capable de former une couche d'oxyde natif à l'air, tel que l'aluminium, les aciers inoxydables, le zinc, l'étain, le cuivre, le titane, le nickel et leurs alliages.

Avantageusement, le substrat support est entièrement constitué dudit métal présentant une couche d'oxyde natif.

Le matériau composite adsorbant ainsi conçu, avec ou sans support, est particulièrement utile pour un contrôle d'humidité dans lequel la température appliquée au métal et la teneur en humidité relative induira l'adsorption ou la désorption d'humidité du matériau composite adsorbant.

Selon une autre possibilité, la surface de réception comprend une céramique, telle que du verre ou de l'alumine. Avantageusement, le substrat support est entièrement constitué de ladite céramique. Le dispositif obtenu est avantageusement utilisé dans un échangeur thermique. En effet, l'adsorption ou la désorption d'humidité du matériau composite adsorbant, selon la teneur en humidité relative et la température de l'environnement considéré, conduira à augmenter ou diminuer la température de la céramique.

Selon une variante, la surface de réception du substrat support comprend un primaire d'accroche configuré pour présenter des fonctions hydroxyles. Par l'expression 'primaire d'accroche' on entend dans le présent document un film de matériau dont la surface exposée

présente des groupements hydroxyles ou qui est capable d'une activation énergétique de la surface par un traitement plasma, laser ou un nettoyage acide.

De préférence, le primaire d'accroche utilisé est un silane et notamment un $\gamma$-amino propyl triéthoxysilane ou un 3-amino propyldiméthyléthoxysilane.

Selon encore un autre aspect, la présente invention propose un procédé de fabrication d'un dispositif de contrôle d'humidité, d'un dispositif d'échange thermique ou de stockage thermique tel que précédemment décrit, comprenant :

- a) préparation d'une formulation précurseur en mélangeant un adsorbant d'humidité asséché au préalable, avec un polymère tel que de l'acétate de cellulose ou un élastomère non réticulé, tel qu'un siloxane et/ou un élastomère silané, comme précédemment décrit,
- b) dépôt d'une couche de la formulation précurseur sur la surface de réception du substrat support,
- c) réticulation de la couche de la formulation précurseur lorsque le polymère comprend un élastomère non réticulé ou application d'un traitement thermique de mise en forme lorsque le polymère comprend de l'acétate de cellulose, de sorte à obtenir un matériau composite adsorbant déposé sur la surface de réception.

Le mélange composite est homogénéisé par un mélangeur mécanique ou par ultrason de sorte à obtenir une formulation précurseur homogène. Le mélangeur utilisé peut être tout dispositif permettant d'homogénéiser un mélange de poudre avec une phase fluide tel qu'un mélangeur à peinture, un mélangeur bras mécanique, une bétonnière.

L'assèchement de l'adsorbant d'humidité est réalisé par un traitement thermique réalisé dans des conditions de température, d' humidité relative et de durée permettant la désorption totale de l'adsorbant d'humidité.

Selon un mode de réalisation, la formulation précurseur comprend un taux charge adsorbant d'humidité allant de 10 à 20% en volume par rapport au volume de la formulation précurseur de sorte à obtenir une viscosité de la formulation précurseur adaptée à un dépôt par pulvérisation de la formulation précurseur sur la surface de réception du substrat support.

Selon une variante de réalisation, la formulation précurseur est déposée par coulée de la formulation précurseur sur la surface de réception du substrat support.

Selon une autre possibilité, la formulation précurseur est déposée par immersion du substrat support dans un bain de ladite formulation précurseur.

Dans ces deux modes de réalisation, le taux charge en adsorbant d'humidité varie de 20 à 40% en volume par rapport au volume de la formulation précurseur de sorte à obtenir une viscosité de la formulation précurseur adaptée.

Selon une disposition, l'étape c) de réticulation est réalisée à température ambiante, notamment lorsque la formulation précurseur comprend un agent de réticulation.

Selon une variante, l'étape c) de réticulation comprend l'application d'un traitement thermique à une température inférieure à 100°C et de préférence inférieure ou égale à 80°C.

Selon une variante, l'étape c) de mise en forme de la formulation précurseur comprenant de l'acétate de cellulose est réalisée par application d'un traitement thermique à une température supérieure ou égale à 260°C.

Le traitement thermique est avantageusement obtenu par conduction (plaque chauffante) par convection (flux d'air chaud) ou par radiation (infrarouges, panneau radiants).

D'autres aspects, buts et avantages de la présente invention apparaîtront mieux à la lecture de la description suivante d'un mode de réalisation de celle-ci, donnée à titre d'exemple non limitatif et faite en référence aux figures annexées. Les figures ne respectent pas nécessairement l'échelle de tous les éléments représentés de sorte à améliorer leur lisibilité.

La figure 1 est une vue schématique illustrant un dépôt par coulée d'une formulation précurseur sur un substrat support selon un mode de réalisation de l'invention,

La figure 2 est une vue schématique illustrant un dépôt par immersion d'une formulation précurseur sur un substrat support selon un mode de réalisation de l'invention,

La figure 3 est une vue schématique illustrant un dispositif d'échange de chaleur selon un mode de réalisation de l'invention,

La figure 4 est une vue schématique illustrant un agrandissement de la surface de réception d'un substrat support du dispositif d'échange de chaleur illustré à la figure 3.

La figure 5 est une vue schématique illustrant un agrandissement du matériau composite adsorbant du dispositif d'échange de chaleur illustré aux figures 3 et 4.

Aux figures 1 à 3 est illustré un procédé de fabrication d'un dispositif 200 de contrôle d'humidité, d'échange ou de stockage thermique comprenant une couche de matériau composite adsorbant 4 sur une face de réception 5 d'un support 6.

Pour ce faire, un matériau composite adsorbant 4 est tout d'abord formé par préparation d'une formulation précurseur 100 comprenant un adsorbant d'humidité 1, telle qu'une zéolite, et un polymère 2 tel que l'élastomère PDMS non réticulé. Après obtention d'une formulation 100 homogène, elle est pulvérisée, déposée par coulée ou déposée par immersion sur une surface de réception du substrat support 6. Puis un traitement thermique est appliqué à 80°C afin de réticuler le PDMS et former une couche de matériau composite adsorbant 4.

Un exemple de réalisation de l'invention pour la fabrication d'un dispositif d'échange de chaleur est maintenant décrit en détail.

Selon l'étape a) du procédé de fabrication, la zéolite est désorbée par application d'un traitement thermique à 80°C pendant 1h (l'eau adsorbée à l'air libre est retirée). Puis 39,57g de la zéolite asséchée sont prélevés puis mélangés à 60,3 g de PDMS non réticulé. Un mélange de la formulation précurseur 100 obtenue est effectué par un mélangeur à peinture pendant au moins 5 min de sorte à éliminer les agrégats de zéolite. La formulation précurseur 100 comprenant un taux de charge de 22% en volume en adsorbant d'humidité 1 est ensuite déposée par coulée sur une surface de réception 5 d'un substrat support 6, composé de sphères ou billes de verre (pour le stockage de chaleur) selon l'étape b) du procédé, tel qu'illustré à la figure 1. Les billes de verre présentent en effet des groupements hydroxyles à la surface de réception 5, indispensables pour obtenir l'accroche et l'adhérence du matériau composite adsorbant 4. Dans cet exemple de réalisation, la surface de réception 5 correspond à la totalité de la surface du substrat support 6 et le matériau composite adsorbant 4 prendra la forme d'une couche d'enrobage du substrat support 6.

Selon l'étape c) du procédé, le PDMS est ensuite réticulé par application d'un traitement thermique au substrat support 6 recouvert de ladite formulation précurseur 100 à une température comprise entre 80 et 100°C pendant une durée d'environ 10 min. En fin de réticulation, la couche d'enrobage en matériau composite adsorbant 4 présente une épaisseur d'environ 450 micromètres.

D'autres expériences de fabrication de dispositif 200 ont été réalisées en faisant varier la concentration de zéolite dans la formulation précurseur 100. Un taux de charge compris entre 20 et 25% en volume permet d'obtenir une couche d'enrobage de qualité. Lorsque le taux de charge est plus élevé, la formulation précurseur 100 devient très visqueuse pour l'étape b) de dépôt par coulée. Un taux de charge plus faible conduit à une formulation précurseur 100 est susceptible de conduire à un matériau composite dont la cinétique d'adsorption n'est plus aussi satisfaisante.

Selon une autre possibilité de dépôt de la formulation précurseur 100 destinée à former la couche de matériau composite adsorbant 4, le substrat support 6 est immergé via une grille 7 dans un bain de formulation précurseur 100 comme illustré à la figure 2.

A l'issue du procédé de fabrication du dispositif 200 d'échange de chaleur, des billes de verre 6 capables de stocker la chaleur sont enrobées d'une couche d'enrobage en matériau composite adsorbant 4, tel qu'illustré à la figure 3. Un agrandissement de l'interface visible à la figure 4 montre la surface 5 en verre 6 couverte par une matériau composite adsorbant 4 constitué d'une matrice 3 contentant la zéolite se présente sous forme de 'grains cristallins'. La matrice 3 étant perméable à la vapeur d'eau, les molécules d'eau 8 traversent la matrice 3 et sont adsorbées ou désorbées par la zéolite selon la température et l'humidité relative de l'environnement (figure 5).

Selon une variante non illustrée, le polymère 2 destiné à former la matrice 3 est choisi de sorte que la matrice 3 présente une perméabilité au gaz supérieur à 6000 barrers et de préférence 10000 barrers. Des exemples de polymère 2 sont l'acétate de cellulose (qui sera mis en forme après dépôt à 260°C) des élastomères de la famille des siloxanes, ou des élastomères silanés qui seront réticulés à l'ambiante ou par traitement thermique selon que la formulation précurseur 100 contient un agent de réticulation ou en est exempte.

Selon une autre mode de réalisation, le substrat support 6 est choisi parmi une céramique telle que de l'alumine ce qui permet d'obtenir un autre dispositif 200 d'échange de chaleur.

Selon une variante, le substrat support 6 est un métal présentant un oxyde natif en surface, tel que l'aluminium, les aciers inoxydables, le zinc, l'étain, le cuivre, le titane et leurs alliages, de sorte à présenter des groupements hydroxyle à la surface de réception 5. Le dispositif 200 obtenu à base de métal est avantageusement utilisé pour le contrôle d'humidité. Selon une autre possibilité, le substrat support 6 n'est pas doté de fonction hydroxyle en surface. Il est alors recouvert d'un primaire d'accroche présentant des liaisons OH en surface. Selon une autre option, la formulation précurseur 100 comprend le primaire d'accroche de sorte qu'il n'est pas nécessaire de procéder à une étape supplémentaire de dépôt sur la surface de réception 5. Selon une autre variante non illustrée, la surface de réception 5 est planaire, par exemple dans le cas d'un substrat support 6 présentant une forme globale de plaque, et la couche de matériau composite adsorbant 4 est alors une couche de recouvrement, la couche ne couvrant qu'une face de ladite plaque.

Selon d'autres modes de réalisation non détaillés ici, l'adsorbant d'humidité 1 est choisi parmi la zéolite du type silico-alumino-phosphate, notamment une zéolite Mitsubishi Plastics AQSOA-Z01®, AQSOA-Z02®, AQSOA-Z05®, un alumino-silicate XAY et un ferro-alumino-phosphate, ou bien du gel de silice et dérives, du charbon actif, ou de l'alumine activée.

Selon une variante de réalisation, le taux de charge de l'adsorbant d'humidité 1 est variable dans une plage plus importante, allant de 10% à 70% en volume.

Enfin, les inventeurs de la présente invention ont réalisé des tests comparant la capacité d'adsorption et de désorption d'un matériau composite adsorbant 4, de la matrice 3 en un polymère perméable utilisée seule (PDMS réticulé), et de l'adsorbant d'humidité 1 seul (zéolite).

Deux exemples de matériaux composites adsorbants 4 comprenant respectivement 14% en volume et 23% en volume de zéolite dans la formulation précurseur ont été testés.

Ces quatre composés ont été au préalable placés dans des conditions de température et d'humidité relative permettant de saturer la totalité de leur capacité d'adsorption en vapeur d'eau. Les composés ont été ensuite pesés puis placés à une température de 60°C. Une pesée des composés a été réalisée toutes les 10 min jusqu'à 150 min pour suivre l'évolution de la désorption.

Le poids du PDMS réticulé a peu évolué, ce qui montre que ce polymère réticulé n'avait pas adsorbé d'eau, il est donc un candidat de choix pour servir de matrice 3 à un adsorbant d'humidité 1 car elle présente une faible capacité à absorber les molécules d'eau.

Le poids de la zéolite seule a diminué pendant 40 min en montrant une désorption d'environ 18% en eau.

Le poids du matériau composite adsorbant 4 comprenant 14%v de zéolite a diminué avec une cinétique plus lente mais en montrant une désorption selon un pourcentage d'eau équivalent à celui de la zéolite seule.

Le poids du composite adsorbant 4 comprenant 23%v de zéolite a diminué dans les mêmes proportions avec une cinétique équivalente.

Cette expérience montre ainsi que la zéolite du matériau composite adsorbant 4 conserve ses propriétés sorbantes dans la matrice 3 de PDMS réticulé et ce, quelle que soit la concentration ou taux de charge en zéolite, même si la cinétique est un peu plus lente.

Ainsi, la présente invention propose un matériau composite adsorbant 4 aussi efficace en terme d'absorption/désorption que l'adsorbant d'humidité 1 seul, tout en présentant une très bonne résistance mécanique aux chocs et aux contraintes mécaniques statiques ou répétées, grâce à la composition de la matrice 3 en un polymère perméable. Ce matériau composite adsorbant 4 est également stable thermiquement et peut résister à des températures allant jusqu'à 250°C de sorte qu'il résiste au cyclage thermique. La viscosité de la formulation précurseur 100 peut être facilement variée de sorte à permettre diverses modes de mise en œuvre et notamment sur différents types de substrats supports, telles que les céramiques, métaux, etc... pour peu que leur surface de réception 5 présente des groupements hydroxyles. Les dispositifs 200 ainsi obtenus trouvent une application dans le contrôle de l'humidité ou l'échange de chaleur fonctionnant dans une plage de température pouvant varier entre 50°C et 250°C en fonction du choix de l'adsorbant d'humidité 1 constitutif.

Il va de soi que l'invention n'est pas limitée aux variantes de réalisation décrites ci-dessus à titre d'exemple mais qu'elle comprend tous les équivalents techniques et les variantes des moyens décrits ainsi que leurs combinaisons.

## Revendications

1. Matériau composite adsorbant (4) destiné à des dispositifs de contrôle de l'humidité, des dispositifs d'échange thermique ou de stockage thermique, le matériau composite adsorbant (4) comprenant :

   - un adsorbant d'humidité (1), choisi dans le groupe comprenant une zéolite, un gel de silice, un charbon actif, une alumine activée et/ou leur combinaison, et
   - une matrice (3) en un polymère perméable, ledit polymère perméable étant obtenu à partir d'un polymère (2) choisi parmi l'acétate de cellulose ou un élastomère non réticulé, tel qu'un siloxane et/ou un élastomère silané, de sorte que la matrice (3) en un polymère perméable est stable jusqu'à 240°C et présente une perméabilité à la vapeur d'eau supérieure à 6000 barrers.

2. Matériau composite adsorbant (4) selon la revendication 1, dans lequel la matrice (3) en un polymère perméable est obtenue par réticulation d'un siloxane, et de préférence par réticulation de PDMS.

3. Matériau composite adsorbant (4) selon l'une des revendications 1 à 2, dans lequel l'adsorbant d'humidité (1) est une zéolite choisie parmi un silico-alumino-phosphate, notamment une zéolite Mitsubishi Plastics AQSOA-Z01®, AQSOA-Z02®, AQSOA-Z05®, un alumino-silicate XAY et un ferro-aluminophosphate.

4. Matériau composite adsorbant (4) selon l'une des revendications 1 à 3, dans lequel le taux de charge de l'adsorbant d'humidité (1) est compris dans une plage allant d'environ 10% en volume à environ 70% en volume par rapport au volume d'une formulation précurseur (100) du matériau composite adsorbant.

5. Dispositif (200) de contrôle d'humidité, dispositif d'échange thermique ou de stockage thermique, comprenant un substrat support (6) comportant une surface de réception (5) et une couche d'un matériau composite adsorbant (4) selon l'une des revendications 1 à 4, déposée sur la surface de réception (5).

6. Dispositif (200) de contrôle d'humidité, dispositif d'échange thermique ou de stockage thermique selon la revendication 5, dans lequel la surface de réception (5) est configurée pour présenter des groupements hydroxyles.

7. Dispositif (200) de contrôle d'humidité, d'échange thermique ou de stockage thermique selon l'une des revendication 5 à 6, dans lequel la surface de réception (5) comprend un métal capable de former une couche d'oxyde natif à l'air, tel que l'aluminium, les aciers inoxydables, le zinc, l'étain, le cuivre, le titane, le nickel et leurs alliages.

**8.** Dispositif (200) de contrôle d'humidité, d'échange thermique ou de stockage thermique selon la revendication 5 à 6, dans lequel la surface de réception (5) comprend une céramique, telle que du verre ou de l'alumine.

**9.** Dispositif (200) de contrôle d'humidité, d'échange thermique ou de stockage thermique selon l'une des revendications 5 à 8, dans lequel la surface de réception (5) comprend un primaire d'accroche configuré pour présenter des fonctions hydroxyles.

**10.** Procédé de fabrication d'un dispositif (200) de contrôle de l'humidité, d'un dispositif d'échange thermique ou de stockage thermique selon l'une des revendications 5 à 9 comprenant :

- a) préparation d'une formulation précurseur (100) en mélangeant un adsorbant d'humidité (1) asséché au préalable, avec un polymère (2) tel que de l'acétate de cellulose ou un élastomère non réticulé, tel qu'un siloxane et/ou un élastomère silané, tel que précédemment décrit,
- b) dépôt d'une couche de la formulation précurseur (100) sur la surface de réception (5) du substrat support (6),
- c) réticulation de la couche de la formulation précurseur (100) lorsque le polymère (2) comprend un élastomère non réticulé ou application d'un traitement thermique de mise en forme lorsque le polymère (2) comprend de l'acétate de cellulose, de sorte à obtenir un matériau composite adsorbant (4) déposé sur la surface de réception (5).

Fig. 1

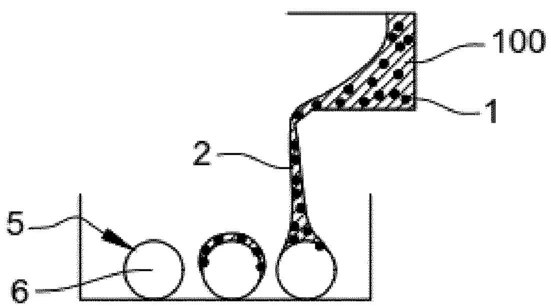


Fig. 2

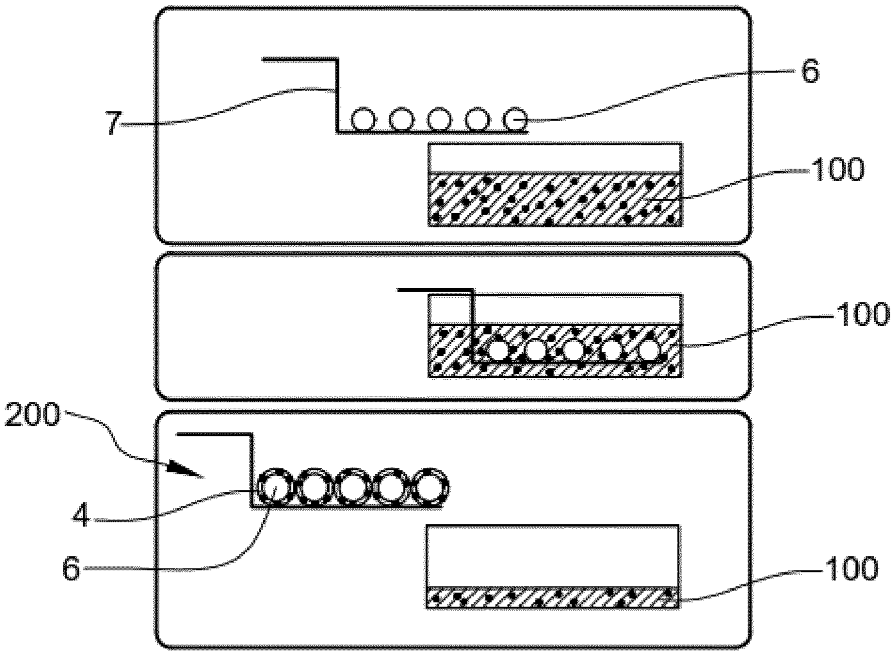

Fig. 3

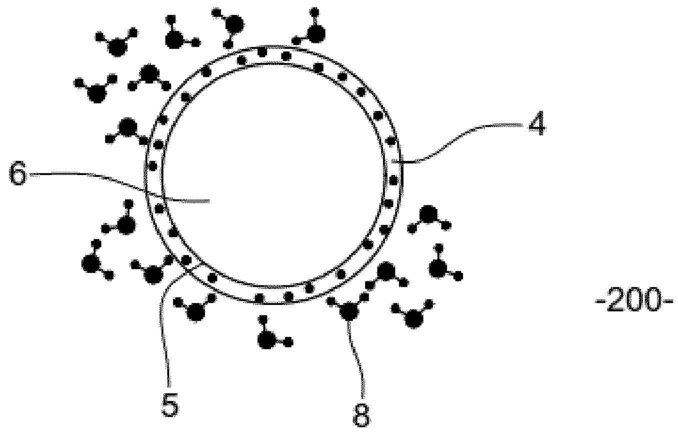


[Fig. 4

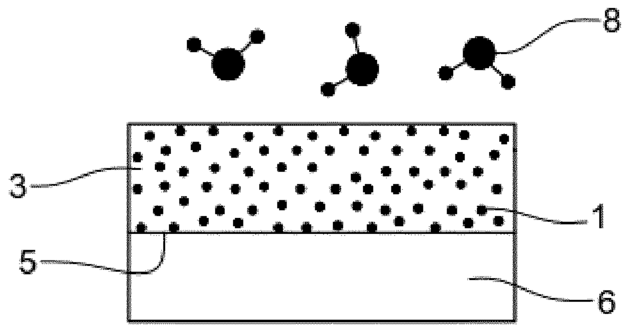


Fig. 5

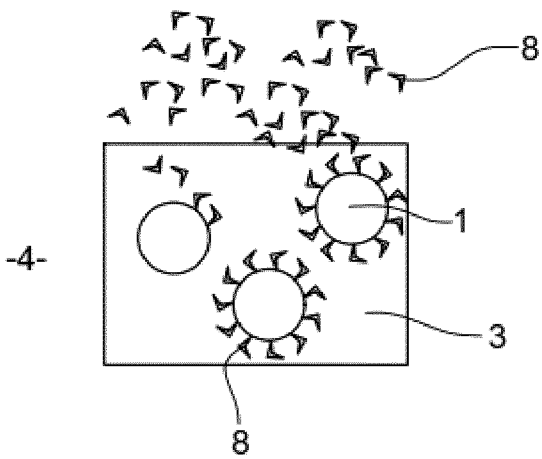

Europäisches Patentamt
European Patent Office
Office européen des brevets

# RAPPORT DE RECHERCHE EUROPEENNE

Numéro de la demande
EP 22 15 0593

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2020/120142 A1 (SORPTION TECH GMBH [DE]) 18 juin 2020 (2020-06-18)<br>* page 1, alinéa 3 *<br>* page 2, alinéa 2 *<br>* page 3, alinéas 3,4 *<br>* page 4, lignes 3-9 *<br>* page 5, alinéa 3 *<br>* page 6, lignes 10-12, alinéa 3 *<br>* page 7, dernière ligne, alinéa 5 *<br>* page 8, lignes 8-11, alinéa 5 *<br>* page 9, alinéas 1,2 *<br>* page 10, ligne 6 *<br>* page 11, alinéa 3 *<br>* page 12, lignes 4-5,7, alinéa 1-3 *<br>* page 13, lignes 11-13 *<br>* page 14, lignes 10-13, alinéas 5,6 *<br>* page 15, lignes 6-9, alinéa 3 *<br>* page 16, lignes 2-4,8-9 *<br>-----<br>-/-- | 1-10 | INV.<br>B01J20/26<br>B01J20/08<br>B01J20/10<br>B01J20/20<br>B01J20/28<br>B01J20/18<br>F28F13/18<br>B01D53/26<br>B01J20/32 |
| | | | DOMAINES TECHNIQUES RECHERCHES (IPC) |
| | | | B01J<br>F28F<br>B01D |

3

Le présent rapport a été établi pour toutes les revendications

| Lieu de la recherche | Date d'achèvement de la recherche | Examinateur |
|---|---|---|
| La Haye | 3 mars 2022 | Hilgenga, Jan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

page 1 de 2

Europäisches Patentamt
European Patent Office
Office européen des brevets

# RAPPORT DE RECHERCHE EUROPEENNE

Numéro de la demande
EP 22 15 0593

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ANGELO FRENI ET AL: "SAPO-34 coated adsorbent heat exchanger for adsorption chillers", APPLIED THERMAL ENGINEERING, vol. 82, 3 mars 2015 (2015-03-03), pages 1-7, XP055273476, GB ISSN: 1359-4311, DOI: 10.1016/j.applthermaleng.2015.02.052 * page 2, colonne de gauche, alinéa 2 * * page 2, colonne de droite, alinéa 3.1; figure 1 * * page 3; figure 2 * * page 2, colonne de droite, alinéa 1 * * page 5, alinéa 4 * * page 2, colonne de gauche, dernier alinéa - colonne d, ligne 1 * * page 2, colonne de gauche, dernier alinéa * * page 4, alinéa 4 * * page 2, colonne de gauche, alinéa 2 - colonne de droite, ligne 11 * ----- | 1,3-7,9, 10 | |

DOMAINES TECHNIQUES RECHERCHES (IPC)

3

Le présent rapport a été établi pour toutes les revendications

| Lieu de la recherche | Date d'achèvement de la recherche | Examinateur |
|---|---|---|
| La Haye | 3 mars 2022 | Hilgenga, Jan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

page 2 de 2

## ANNEXE AU RAPPORT DE RECHERCHE EUROPEENNE RELATIF A LA DEMANDE DE BREVET EUROPEEN NO.

EP 22 15 0593

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-03-2022

| Document brevet cité au rapport de recherche | Date de publication | Membre(s) de la famille de brevet(s) | Date de publication |
|---|---|---|---|
| WO 2020120142 A1 | 18-06-2020 | CN 111868188 A | 30-10-2020 |
| | | DE 102018132348 A1 | 18-06-2020 |
| | | EP 3894492 A1 | 20-10-2021 |
| | | JP 2022513883 A | 09-02-2022 |
| | | US 2022023831 A1 | 27-01-2022 |
| | | WO 2020120142 A1 | 18-06-2020 |

EPO FORM P0460

Pour tout renseignement concernant cette annexe : voir Journal Officiel de l'Office européen des brevets, No.12/82